(19) Europäisches Patentamt
European Patent Office
Office européen des brevets

(11) **EP 4 572 306 A1**

(12) **EUROPEAN PATENT APPLICATION**
published in accordance with Art. 153(4) EPC

(43) Date of publication:
**18.06.2025 Bulletin 2025/25**

(51) International Patent Classification (IPC):
**H04N 7/18** (2006.01)

(21) Application number: **23851353.5**

(52) Cooperative Patent Classification (CPC):
**H04N 7/18; H04N 23/60**

(22) Date of filing: **07.06.2023**

(86) International application number:
**PCT/CN2023/098944**

(87) International publication number:
**WO 2024/032125 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **08.08.2022 CN 202210943475**

(71) Applicant: **Huizhou TCL Mobile Communication
Co., Ltd
Guangdong 516006 (CN)**

(72) Inventors:
• **NIE, Bingbing
Guangdong 516006 (CN)**
• **JIA, Binbin
Guangdong 516006 (CN)**
• **ZHANG, Xiaohui
Guangdong 516006 (CN)**

(74) Representative: **Murgitroyd & Company
165-169 Scotland Street
Glasgow G5 8PL (GB)**

(54) **CAMERA MONITORING METHOD AND APPARATUS**

(57) Provided in the present application are a camera monitoring method and apparatus. The method comprises: when it is triggered to enter a privacy mode, adjusting hardware parameters of a camera to preset hardware parameters; and monitoring a target scenario in the privacy mode by using the camera with the adjusted hardware parameters. In the present application, when a trigger condition for entering a privacy mode is triggered, hardware parameters of a camera are adjusted and then monitoring is performed, such that, an image which is obtained when monitoring is performed in the privacy mode is more blurred than an image which is photographed in a focusing state.

When a trigger condition for entering a privacy mode is met, adjusting a hardware parameter of a camera to a preset hardware parameter, wherein a clarity of an image captured by the camera under the preset hardware parameter is lower than a clarity of an image captured by the camera in a focused state. — S201

Using the camera with an adjusted hardware parameter to monitor a target scene in a privacy mode. — S202

FIG. 2

EP 4 572 306 A1

## Description

This application claims priority to Chinese Patent Applications No. 2022109434759, filed on August 8, 2022 and entitled "CAMERA MONITORING METHOD AND APPARATUS". The entire disclosures of the above application are incorporated herein by reference.

TECHNICAL FIELD

The present application relates to a camera monitoring method and apparatus.

BACKGROUND TECHNOLOGY

With the development of smart homes, the application of indoor cameras has become increasingly widespread, such as integrating cameras into electric fans or air conditioners to detect human presence, automatically adjust airflow direction, and even conduct indoor monitoring. However, as privacy concerns gain more attention, the application of indoor cameras faces challenges. Solutions such as thermal imaging, pyroelectric infrared sensors, and radar technology can partially address privacy concerns. However, thermal imaging and radar-based solutions are costly, while infrared sensors can only detect human movement without distinguishing between humans and animals and are susceptible to temperature variations. Some solutions use mechanical covers to block the camera, but once the camera is covered, it loses its functionality. Traditional camera applications operate in a focused state, producing clear images that can easily compromise personal privacy. While some applications apply post-processing techniques like pixelation or blurring to obscure the clear images, these methods process an originally clear image, making it susceptible to leaks. Additionally, it is possible to restore the original clear image using certain techniques, thereby reducing the camera's ability to protect privacy.

In summary, existing camera monitoring technologies have weak privacy protection capabilities.

SUMMARY OF INVENTION

This application provides a camera monitoring method and apparatus aimed at solving the issue of weak privacy protection capabilities in existing camera monitoring technologies.

In a first aspect, the present application provides a camera monitoring method, comprising:
When a trigger condition for entering a privacy mode is met, adjusting a hardware parameter of a camera to a preset hardware parameter, wherein a clarity of an image captured by the camera under the preset hardware parameter is lower than a clarity of an image captured by the camera in a focused state.

Using the camera with an adjusted hardware parameter to monitor a target scene in a privacy mode.

Optionally, the preset hardware parameter comprises a target position of a lens, and adjusting the hardware parameter of the camera to the preset hardware parameter when the trigger condition for entering the privacy mode is met comprises:

When the trigger condition for entering the privacy mode is met, moving the lens of the camera to the target position, wherein the target position is different from a lens position of the camera in the focused state.

Optionally, the preset hardware parameter comprises a preset focal length of the lens, wherein the lens is made of metamaterials, and adjusting the hardware parameter of the camera to the preset hardware parameter when the trigger condition for entering the privacy mode is met comprises:

When the trigger condition for entering the privacy mode is met, adjusting the focal length of the camera to the preset focal length, wherein the preset focal length is different from the focal length of the camera in the focused state.

Optionally, before moving the lens of the camera to the target position when the trigger condition for entering the privacy mode is met, the method further comprises:
Acquiring a first scene image captured by the camera in the focused state for the target scene.

Performing face recognition on the first scene image.

Matching a recognized face image with a pre-stored user face image.

When a target face image in the first scene image matches the pre-stored user face image, determining that the trigger condition for entering the privacy mode is met.

Optionally, moving the lens of the camera to the target position when the trigger condition for entering the privacy mode is met comprises:
When the trigger condition for entering the privacy mode is met, obtaining a current object distance of the target face image in the target scene from the camera.

Determining a current depth of field range based on a current object distance and a preset object distance-depth of field mapping relationship.

Determining an initial movement position based on the current depth of field range, wherein the depth of field range of the lens of the camera at the initial movement position does not overlap with the current depth of field range.

Determining the target position based on the initial movement position.

Optionally, determining the target position based on the initial movement position comprises:

Acquiring a second scene image captured by the camera at the initial movement position.

Determining whether a clarity of the second scene image exceeds a preset value.

If the clarity of the second scene image does not exceed the preset value, determining the initial movement position as the target position.

Optionally, if the clarity of the second scene image does not exceed the preset value, the initial movement position is determined as the target position, comprising:

If the clarity of the second scene image does not exceed the preset value, performing face recognition.

If the face recognition is successful, determining the initial movement position as the target position.

Optionally, the camera monitoring method further comprises:

Acquiring a fourth scene image captured by the camera at the target position.

Performing human contour recognition on the fourth scene image to obtain a number of human contours in the fourth scene image.

Performing human contour recognition on the first scene image to obtain a number of human contours in the first scene image.

Determining whether the number of human contours in the fourth scene image is same as the number of human contours in the first scene image.

If the number of human contours in the fourth scene image is different from the number of human contours in the first scene image, exiting the privacy mode.

In a second aspect, the present application provides a camera monitoring device, comprising:

A parameter adjuster configured to adjust a hardware parameter of a camera to a preset hardware parameter when a trigger condition for entering a privacy mode is met, wherein a clarity of an image captured by the camera under the preset hardware parameter is lower than a clarity of an image captured by the camera in a focused state.

A monitor configured to use the camera with an adjusted hardware parameter to monitor a target scene in a privacy mode.

Optionally, the preset hardware parameter comprises the target position of the lens. The parameter adjuster is configured to:

When the trigger condition for entering the privacy mode is met, move the lens of the camera to the target position, wherein the target position is different from the lens position of the camera in the focused state.

Optionally, the preset hardware parameter comprises a preset focal length of the lens, wherein the lens is made of metamaterials. The parameter adjuster is configured to:

When the trigger condition for entering the privacy mode is met, adjust the focal length of the camera to the preset focal length, wherein the preset focal length is different from the focal length of the camera in the focused state.

Optionally, the parameter adjuster is configured to:

Acquire a first scene image captured by the camera in the focused state for the target scene.

Perform face recognition on the first scene image.

Match a recognized face image with a pre-stored user face image.

When a target face image in the first scene image matches the pre-stored user face image, determine that the trigger condition for entering the privacy mode is met.

Optionally, the parameter adjuster is configured to:

When the trigger condition for entering the privacy mode is met, obtain a current object distance of the target face image in the target scene from the camera.

Determine a current depth of field range based on the current object distance and a preset object distance-depth of field mapping relationship.

Determine an initial movement position based on the current depth of field range, wherein the depth of field range of the camera lens at the initial movement position does not overlap with the current depth of field range.

Determine a target position based on the initial movement position.

Optionally, the parameter adjuster is configured to:

Acquire a second scene image captured by the camera at the initial movement position.

Determine whether a clarity of the second scene image exceeds a preset value.

If the clarity of the second scene image does not exceed the preset value, determine the initial movement position as the target position.

Optionally, the parameter adjuster is configured to:

If the clarity of the second scene image does not exceed the preset value, perform face recognition.

If the face recognition is successful, determine the initial movement position as the target position.

Optionally, the monitor is configured to:
Acquire a fourth scene image captured by the camera at the target position.

Perform human contour recognition on the fourth scene image to obtain the number of human contours in the fourth scene image.

Perform human contour recognition on the first scene image to obtain the number of human contours in the first scene image.

Determine whether the number of human contours in the fourth scene image is the same as that in the first scene image.

If the number of human contours in the fourth scene image is different from that in the first scene image, exit the privacy mode.

In a third aspect, this application provides an intelligent device, wherein the intelligent device comprises:
One or more processors.

A memory.

One or more applications, wherein the one or more applications are stored in the memory and configured to be executed by the processor to implement any one of the camera monitoring methods described in the first aspect.

In a fourth aspect, this application provides a computer-readable storage medium, wherein the computer-readable storage medium stores multiple instructions, and the instructions are suitable for being loaded by a processor to execute the steps of any one of the camera monitoring methods described in the first aspect.

This application provides a camera monitoring method and apparatus, wherein the camera monitoring method comprises: When the trigger condition for entering privacy mode is met, adjusting the hardware parameter of the camera to a preset hardware parameter, wherein the clarity of images captured by the camera under the preset hardware parameter is lower than the clarity of images captured by the camera in a focused state. Using the camera with an adjusted hardware parameter to monitor a target scene in privacy mode. In this application, when the trigger condition for entering privacy mode is met, the hardware parameter of the camera are adjusted before monitoring. During monitoring in privacy mode, the captured images are more blurred compared to those taken in a focused state. Since the adjustment is made to the hardware parameter of the camera, it is impossible to restore the original clear images from the images captured in privacy mode, thereby enhancing the camera's ability to protect privacy.

BRIEF DESCRIPTION OF THE DRAWINGS

In order to more clearly illustrate technical solutions in embodiments of the present application, the following briefly introduces accompanying drawings required for use in the description of the embodiments. Apparently, the accompanying drawings described below are only some embodiments of the present application. For those skilled in the art, other drawings can also be obtained based on these accompanying drawings without creative efforts.

FIG. 1 is a schematic diagram of a scene of a display control system provided in an embodiment of this application.
FIG. 2 is a flowchart illustrating an embodiment of a camera monitoring method provided in an embodiment of this application.
FIG. 3 is a flowchart illustrating a camera monitoring method provided an embodiment of this application, showing a process before moving a lens of a camera to a target position when a trigger condition for entering a privacy mode is detected.
FIG. 4 is a flowchart illustrating a camera monitoring method provided in an embodiment of this application, showing a process of moving a lens of a camera to a target position when a trigger condition for entering a privacy mode is detected.
FIG. 5 is a schematic diagram of a depth of field of a camera.
FIG. 6 is a schematic diagram of a lens adjustment parameter of a camera.
FIG. 7 is a structural schematic diagram of a camera monitoring device provided in an embodiment of this application.
FIG. 8 is a structural schematic diagram of an intelligent device provided in an embodiment of this application.

DETAILED DESCRIPTION OF THE EMBODIMENTS

The following will provide a clear and complete description of the technical solutions in the embodiments of this application in conjunction with the accompanying drawings. It is evident that the described embodiments are merely a part of the embodiments of this application and not all of them. Based on the embodiments in this application, all other embodiments obtained by those skilled in the art without making inventive efforts shall fall within the scope of protection of this application.

In the description of this application, it should be understood that the terms "center," "longitudinal," "transverse," "length," "width," "thickness," "upper," "lower," "front," "rear," "left," "right," "vertical," "horizontal," "top," "bottom," "inner," and "outer" indicate orientations or positional relationships based on the orientations or positional relationships shown in the accompanying drawings. These terms are merely used to facilitate the description of this application and simplify the description, rather than to indicate or imply that the referenced devices or components must have specific orientations, be constructed in specific orientations, or operate in specific orientations. Therefore, these terms should not be interpreted as limitations on this application.

Additionally, the terms "first" and "second" are used for descriptive purposes only and should not be understood as indicating relative importance or implicitly specifying the number of the referenced technical features. Thus, features defined as "first" and "second" may explicitly or implicitly include one or more features. In the description of this application, the term "multiple" means two or more unless explicitly defined otherwise.

In this application, the term "exemplary" is used to mean "serving as an example, illustration, or explanation." Any embodiment described as "exemplary" in this application should not necessarily be construed as being preferred or having advantages over other embodiments. To enable any person skilled in the art to implement and use this application, the following description is provided. In the following description, details are provided for explanatory purposes. It should be understood that those skilled in the art can recognize that this application may also be implemented without these specific details. In other instances, well-known structures and processes are not described in detail to avoid unnecessary complexity that may obscure the description of this application. Therefore, this application is not intended to be limited to the embodiments shown but is to be consistent with the broadest scope that aligns with the principles and features disclosed herein.

An embodiment of this application provides a camera monitoring method and apparatus, which are described in detail below.

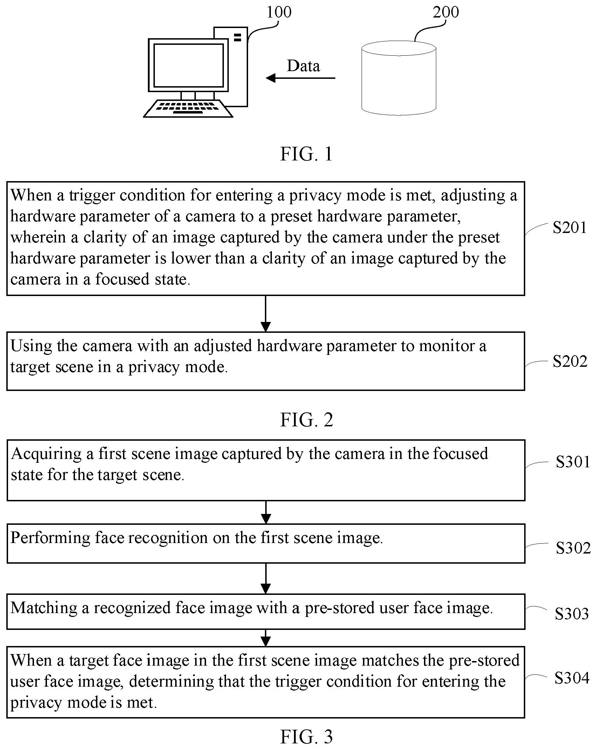

Refer to FIG. 1, which is a schematic diagram of a scene of a camera monitoring system provided in an embodiment of this application. The camera monitoring system may include an intelligent device 100, which integrates a camera monitoring device.

In an embodiment of this application, the intelligent device 100 may be an independent server or a server network or server cluster composed of multiple servers. For example, the intelligent device 100 described in this embodiment may include, but is not limited to, a computer, network host, a single network server, a network server cluster, or a cloud server composed of multiple servers. A cloud server consists of a large number of computers or network servers based on Cloud Computing technology.

In an embodiment of this application, the intelligent device 100 may be a general-purpose intelligent device or a specialized intelligent device. In specific implementations, the intelligent device 100 may be a desktop computer, laptop, network server, personal digital assistant (PDA), mobile phone, tablet, wireless terminal device, communication device, embedded device, automobile, air conditioner, etc. This embodiment does not limit the type of intelligent device 100.

Those skilled in the art can understand that the application environment shown in FIG. 1 is merely one application scenario of this solution and does not limit the application scenarios of this solution. Other application environments may include more or fewer intelligent devices than those shown in FIG. 1. For example, FIG. 1 only illustrates one intelligent device, but it should be understood that the camera monitoring system may include one or more additional intelligent devices capable of processing data, which is not specifically limited here.

Additionally, as shown in FIG. 1, the camera monitoring system may further include a memory 200, which is used for storing data.

It should be noted that the schematic diagram of the camera monitoring system shown in FIG. 1 is merely an example. The camera monitoring system and its scene described in an embodiment of this application are intended to clarify the technical solution of this application and do not constitute a limitation on the technical solution provided by this embodiment. A person of ordinary skill in the art would understand that as camera monitoring systems evolve and new business scenarios emerge, the technical solution provided by an embodiment of this application remains applicable to similar technical problems.

First, an embodiment of this application provides a camera monitoring method, which includes: When the trigger condition for entering a privacy mode is met, adjusting a hardware parameter of a camera to a preset hardware parameter, wherein a clarity of an image captured by the camera under the preset hardware parameter is lower than a clarity of an image captured by the camera in a focused state. Using the camera with an adjusted hardware parameter to monitor a target scene in the privacy mode.

As shown in FIG. 2, which is a flowchart illustrating a camera monitoring method provided in an embodiment of this application, the method includes the following steps S201 to S202:

S201: When the trigger condition for entering the privacy mode is met, adjust the hardware parameter of the camera to the preset hardware parameter, wherein the clarity of the image captured by the camera under the preset hardware parameter is lower than the clarity of the image captured by the camera in a focused state.

Clarity refers to a sharpness of various details and edges in an image.

The focused state refers to a condition in which a subject appears clear in a captured photo. It is achieved after a series of focusing actions that successfully produce a sharp image on an image sensor. Simply put, it means successful focusing, resulting in a clear photograph. When the focus is achieved, there is typically a visual or audio prompt. Focusing refers to adjusting a focus distance when using a camera. The English term for this process is Focus. Digital cameras usually support multiple focusing modes, including automatic focus (AF), manual focus (MF), and multi-point focus mode. Focusing is also referred to as focal adjustment or focusing operation. It involves adjusting the camera's focusing mechanism to modify the distance between the lens and the subject, ensuring that the captured image is clear.

**In** one specific embodiment, when the system detects a voice command from the user, such as "Enter privacy mode", it triggers the privacy mode condition, adjusting the hardware parameter of the camera to the preset hardware parameter.

**In** another specific embodiment, when the system detects a preset gesture command from the user, it triggers the privacy mode condition, adjusting the hardware parameter of the camera to the preset hardware parameter. For example, when a user performs a waving gesture in front of the camera, it triggers the privacy mode condition.

**In** an embodiment of this application, the preset hardware parameter includes a target position of a lens. When the trigger condition for entering the privacy mode is met, the lens of the camera moves to the target position, wherein the target position is different from the lens position in the focused state. When the lens moves to the target position, the camera is no longer in the focused state, thus capturing low-clarity images. Additionally, since blurry images in the privacy mode result from hardware parameter adjustments, it is impossible to restore clear images afterward, thereby enhancing privacy protection.

**In** another specific embodiment, the preset hardware parameter includes a preset focal length of the lens, and the lens is made of metamaterials. When the trigger condition for entering the privacy mode is met, the focal length of the camera is adjusted to the preset focal length, wherein the preset focal length is different from the focal length of the camera in the focused state. Metamaterials (from the Latin root "meta-," meaning "beyond" or "alternative") refer to a class of artificially engineered materials that possess special properties not found in nature. These materials exhibit unique characteristics, such as altering the typical behavior of light or electromagnetic waves, which cannot be achieved with traditional materials. While the composition of metamaterials is not particularly unusual, their distinct properties arise from their precisely engineered geometric structures and nanoscale dimensions. The microstructures in metamaterials are smaller than the wavelength of the waves they interact with, allowing them to manipulate wave behavior. The initial research on metamaterials primarily focused on negative refractive index materials. Focal length is an optical measurement that defines the ability of a system to converge or diverge light. It is the distance from the optical center of the lens to the focal point when parallel light rays enter the system. A short focal length optical system has a stronger ability to converge light compared to a long focal length system. Simply put, focal length is the distance between the focal point and the center of a lens. In cameras, an image can only form when the focal length f is within the range $f <$ image distance $< 2f$.

When the focal length of the camera lens is adjusted, the camera is no longer in a focused state, resulting in low-clarity images. Since the blurry image is caused by hardware parameter adjustments, it is impossible to restore a clear image afterward, thereby enhancing privacy protection.

S202: Monitoring a target scene in the privacy mode using the camera with an adjusted hardware parameter.

The camera can be installed in mobile phones, automobiles, air conditioners, and other devices. The target scene may include indoor environments, the interior of a car, etc. After adjusting the hardware parameter, the camera with adjusted parameter is used to monitor the target scene in the privacy mode. In privacy mode, the blurry image is caused by hardware parameter adjustments, making it impossible to obtain a clear image afterward, thereby enhancing privacy protection.

Furthermore, after adjusting the hardware parameter, the camera with the adjusted parameter captures an image of the target scene in privacy mode, obtaining a privacy mode image. The resolution of the privacy mode image is then reduced to a preset value, and the lower-resolution privacy mode image is stored. By combining hardware parameter adjustments with post-processing of images, the privacy mode image is further enhanced to provide stronger privacy protection.

Furthermore, to accurately determine whether the trigger condition for entering privacy mode is met, refer to FIG. 3. In a specific embodiment, before moving the camera lens to the target position when the trigger condition for entering privacy mode is detected, the process includes steps S301-S304:

S301: Acquiring a first scene image captured by the camera in a focused state.

In a specific embodiment, the camera is an auto-focusing camera. When the camera is powered on, it is controlled to automatically focus, ensuring that the camera enters a focused state. The camera, in its focused state, captures an image of the target scene, obtaining the first scene image, which is a clear image.

S302: Performing face recognition on a first scene image.

S303: matching a recognized face image with a pre-stored user face image.

Specifically, the user face image is pre-collected and can be an image uploaded by the camera registrant. In other embodiments, multiple historical images obtained from monitoring the target scene in privacy mode are analyzed. Face recognition is performed on these historical images to obtain multiple historical face images. The historical face images are then ranked based on frequency of appearance (from high to low), and the top-ranked face images are determined as preset user face images.

S304: If the first scene image does not contain a target face image that matches the user face image, determining that the trigger condition for entering the privacy mode is met.

If the first scene image contains a face matching the user face image, it indicates the presence of a familiar person, triggering privacy protection by entering the privacy mode.

Additionally, if the first scene image does not contain a target face image that matches the user face image, it is further determined whether speech sounds are detected within a preset time. If speech sounds are detected, voiceprint recognition is performed to determine whether the speaker belongs to a preset user group. If the speaker belongs to the preset user group, it is determined that the trigger condition for entering the privacy mode is met. The preset user group consists of pre-stored user voiceprints and user face images. Each user's voiceprint and face image in the preset user group can be pre-stored. Voiceprint recognition, a type of biometric identification technology, is also known as speaker recognition, which includes speaker identification and speaker verification. Voiceprint recognition converts audio signals into electrical signals, which are then processed by a computer for identification. Different tasks and applications utilize different voiceprint recognition techniques: Speaker identification is used in scenarios such as narrowing down criminal investigations. Speaker verification is used in applications such as bank transactions for identity authentication.

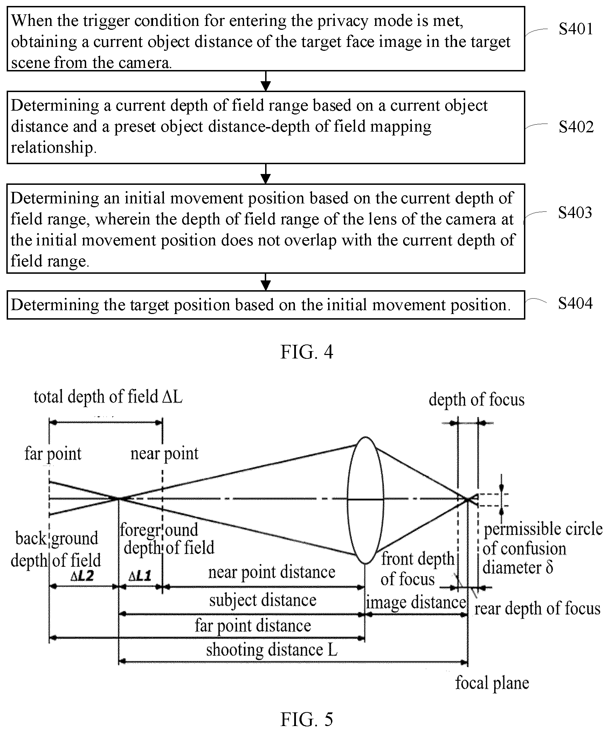

To accurately determine the extent of hardware parameter adjustments, refer to FIG. 4. In a specific embodiment, when a trigger condition for entering the privacy mode is detected, moving the camera lens to the target position may include steps S401-S404:

S401: When the trigger condition for entering the privacy mode is triggered, obtain a current object distance between a target face image in a target scene and the camera.

In a specific embodiment, the camera is a depth camera. The camera may be a monocular camera or a binocular camera. When the trigger condition for entering privacy mode is triggered, the current object distance between the target face image in the target scene and the camera is obtained. The current object distance refers to the distance between the camera lens and the user's face.

With the gradual development of disruptive technologies such as machine vision and autonomous driving, applications related to object recognition, behavior recognition, and scene modeling using depth cameras are becoming increasingly prevalent. It can be said that depth cameras serve as the "eyes" of terminals and robots. Depth cameras, also known as 3D cameras, as the name implies, are capable of detecting the depth distance of the shooting space. This is the biggest difference between depth cameras and ordinary cameras. Ordinary color cameras capture images that display all objects within the camera's field of view and record them, but the recorded data does not include the distance of these objects from the camera. The only way to determine which objects are farther away and which are closer is through semantic analysis of the image, but no exact data is provided. Depth cameras, on the other hand, solve this problem precisely. Through data obtained from a depth camera, we can accurately determine the distance of each point in the image from the camera. By combining this with the (x, y) coordinates of the point in the 2D image, the three-dimensional spatial coordinates of each point in the image can be obtained. With these three-dimensional coordinates, the real scene can be reconstructed, enabling applications such as scene modeling.

S402: Determine a current depth of field range based on a current object distance and a preset object distance-to-depth of field mapping relationship.

As shown in FIG. 5, FIG. 5 is a schematic diagram of the camera's depth of field. The preset object distance-to-depth of field mapping relationship satisfies the following equations:

A foreground depth of field:

$$\Delta L1 = F\delta L^2/(f^2 + F\delta L).$$

A background depth of field:

$$\Delta L2 = F\delta L^2/(f^2 - F\delta L).$$

A total depth of field:

$$\Delta L = \Delta L1 + \Delta L2 = (2\ f^2 F\delta L^2)/(f^4 - F^2\delta^2 L^2).$$

$\delta$ is a permissible circle of confusion diameter.
F is a lens aperture value.
f is a lens focal length.
L is an object distance.

ΔL1 is a foreground depth of field.
ΔL2 is a background depth of field.
ΔL is a total depth of field.

Depth of Field (DOF) refers to the range of distances in front of and behind the subject where the camera lens or other imaging device can produce a sharp image. Aperture, lens, and the distance from the focal plane to the subject are key factors that influence depth of field. After focusing is completed, the range in front of and behind the focal point where a clear image is formed is called the depth of field. In front of the lens (both before and after the focal point), there is a certain length of space. When the subject is within this space, its image on the film falls within the same permissible circle of confusion. The length of this space where the subject is located is called the depth of field. In other words, within this space, the degree of blur in the image projected onto the film surface remains within the permissible limits of the circle of confusion. The length of this space defines the depth of field.

From the above formulas, it can be seen that the larger the aperture, the shallower the depth of field; the smaller the aperture, the deeper the depth of field. The longer the lens focal length, the shallower the depth of field; the shorter the focal length, the deeper the depth of field. Changes in the distance between the subject and the background do not affect the depth of field size; they only determine whether the background is blurred and the degree of blurring. The farther the distance, the deeper the depth of field; the closer the distance (not less than the minimum shooting distance), the shallower the depth of field.

In a specific embodiment, the foreground depth ΔL1 and background depth ΔL2 are determined based on the current object distance and the preset object distance-to-depth of field mapping relationship. The current depth of field range is then determined based on the foreground and background depth values. For example, if the current position of the user's face is A, the current depth of field range is [a1, b1], where: a1=A+ΔL1, b1=A-ΔL2.

S403: Determine an initial movement position based on the current depth of field range, ensuring that the depth of field range at the initial movement position does not overlap with the current depth of field range.

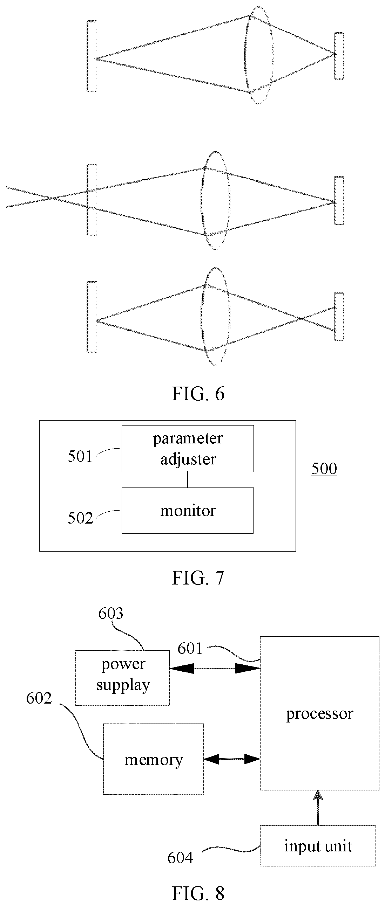

As shown in FIG. 6, FIG. 6 is a schematic diagram of a camera lens adjustment parameter. In FIG. 6, the camera is sequentially in a focused state, an out-of-focus state, and another out-of-focus state from top to bottom.

In a specific embodiment, the current lens position is obtained, and a position at a first preset distance from the current lens position is determined as the candidate lens position. The depth of field range corresponding to the candidate lens position is then calculated. It is then determined whether the depth of field range corresponding to the candidate lens position overlaps with the current depth of field range. If the depth of field range corresponding to the candidate lens position does not overlap with the current depth of field range, the candidate lens position is determined as the initial movement position. If the depth of field range corresponding to the candidate lens position at least partially overlaps with the current depth of field range, the candidate lens position is set as the current lens position. Then, a new candidate lens position is determined at a second preset distance from the candidate lens position, and an iterative calculation is performed until the depth of field range corresponding to the candidate lens position does not overlap with the current depth of field range. Among these parameters, the first preset distance is greater than the second preset distance, allowing the search distance to be gradually reduced to accurately determine the initial movement position. It is understood that, the first preset distance may also be equal to the second preset distance.

For example, the current depth of field range corresponding to the current object distance is [a1, b1]. When the lens moves to the initial movement position, the depth of field range at the initial movement position is calculated based on the corresponding object distance as [a2, b2]. If a1>b2 or b1<a2, then the current depth of field range corresponding to the current object distance does not overlap with the depth of field range at the initial movement position.

S404: Determine the target position based on the initial movement position.

In a specific embodiment, the initial movement position is determined as the target position.

In another specific embodiment, determining the target position based on the initial movement position may include the following steps:

(1) Obtain the second scene image captured by the camera at the initial movement position.
(2) Determine whether the clarity of the second scene image does not exceed a preset value.

Specifically, the clarity of the second scene image is calculated using no-reference image quality assessment algorithms such as the Brenner gradient function and the Tenengrad gradient function. In no-reference image quality assessment, clarity is an important metric for evaluating image quality, as it closely corresponds to human subjective perception. Low clarity results in a blurry image. This paper focuses on the application of no-reference image quality assessment and discusses and analyzes several commonly used and representative clarity algorithms, providing a basis for selecting an appropriate clarity algorithm in practical applications. The Brenner gradient function is the simplest gradient evaluation function, as it merely calculates the squared difference in grayscale values between two adjacent pixels. The Sobel operator is used to extract gradient values in both the horizontal and vertical directions.

In another specific embodiment, the first scene image captured by the camera at the current lens position is obtained. The first scene image is a clear image. The PSNR (Peak Signal-to-Noise Ratio) index is then calculated based on the second scene image and the first scene image. If the PSNR index does not exceed a preset PSNR value, it is determined that the clarity of the second scene image does not exceed the preset value. PSNR, short for "Peak Signal-to-Noise Ratio," is an objective metric for evaluating image quality. However, it has limitations and is generally used in engineering applications to measure the ratio between the maximum signal and background noise. PSNR is an objective indicator for image quality assessment. Typically, when PSNR > 40dB, the image quality is considered close to the original image. When PSNR is between 20dB and 30dB, the image quality is poor. When PSNR < 20dB, the image quality is unacceptable. For example, if the preset PSNR value is 24.2dB, then an image with a PSNR below this threshold would be considered as having insufficient clarity.

(3) If the clarity of the second scene image does not exceed the preset value, the initial movement position is determined as the target position.

If the clarity of the second scene image does not exceed the preset value, it indicates that the image captured at this position meets the clarity requirements. Therefore, the initial movement position is determined as the target position. If the clarity of the second scene image exceeds the preset value, it indicates that the image captured at this position does not meet the required clarity for privacy protection. In this case, the candidate lens position is set as the current lens position, and a new candidate lens position is determined at a second preset distance from the candidate lens position. An iterative calculation is performed until the depth of field range corresponding to the candidate lens position does not overlap with the current depth of field range. At this point, the candidate lens position is determined as the initial movement position.

Further, if the clarity of the second scene image does not exceed the preset value, face recognition is performed on the second scene image. If a face is successfully recognized, the initial movement position is determined as the target position.

Further, if the clarity of the second scene image does not exceed the preset value, multiple third scene images of the target scene are captured. Face recognition is performed on each of the third scene images, and the proportion of third scene images in which a face is successfully recognized is calculated as the first recognition ratio. If the first recognition ratio is lower than the first preset ratio, the initial movement position is determined as the target position. A low first recognition ratio indicates that face recognition cannot be accurately performed on the captured images, thereby ensuring privacy protection.

Further, if the clarity of the second scene image does not exceed the preset value, multiple third scene images of the target scene are captured. Face recognition is performed on each of the third scene images, and the proportion of images in which a face is successfully recognized is calculated as the first recognition ratio. If the first recognition ratio is lower than the first preset ratio, human contour recognition is performed on the third scene images. The proportion of images in which a human contour is successfully recognized is calculated as the second recognition ratio. If the second recognition ratio is higher than the second preset ratio, the initial movement position is determined as the target position. The first preset ratio and the second preset ratio can be set based on specific conditions. A low first recognition ratio indicates that the captured images are sufficiently blurred, preventing accurate face recognition and ensuring privacy protection. A high second recognition ratio indicates that human contour recognition can still be performed. This means that in privacy mode, face recognition is disabled while human contour recognition remains functional. This allows smart home devices such as air conditioners to recognize human presence and adjust their settings accordingly.

Face recognition refers to the identification of a face, while human contour recognition refers to the identification of the entire human body. Specifically, a face recognition neural network is trained using a face image training set, and a human contour recognition neural network is trained using a human contour image training set.

Furthermore, after monitoring the target scene in privacy mode using the camera with an adjusted hardware parameter, the fourth scene image captured by the camera at the target position is obtained. Human contour recognition is performed on the fourth scene image to determine the number of human contours in the image. Similarly, human contour recognition is performed on the first scene image to obtain the number of human contours in the first scene image. It is then determined whether the number of human contours in the fourth scene image is the same as that in the first scene image. If the number of human contours in the fourth scene image differs from that in the first scene image, privacy mode is exited. Specifically, this can be achieved by moving the camera lens to the focal position in the in-focus state or adjusting the camera's focal length to the in-focus focal length.

Furthermore, it is determined whether the number of human contours in the fourth scene image is the same as that in the first scene image. If the number of human contours in the fourth scene image differs from that in the first scene image, it is further determined whether the number of human contours in the fourth scene image is less than that in the first scene image. If the number of human contours in the fourth scene image is less than that in the first scene image, it indicates that someone has left the frame, and privacy mode is exited.

This application provides a camera monitoring method. When a trigger condition for entering privacy mode is triggered, the hardware parameter of the camera is adjusted to the preset hardware parameter, where the clarity captured by the camera under the preset hardware parameter is lower than the clarity captured in the in-focus state. The camera, after adjusting its hardware parameter, is then used to monitor the target scene in privacy mode. In this application, when the trigger condition for entering privacy mode is triggered, the camera's hardware parameter is adjusted before monitoring. During monitoring in privacy mode, the captured images are more blurred than those captured in the in-focus state. Since the adjustment is made to the camera's hardware parameter, the images captured in privacy mode cannot be restored to their original clarity, thereby enhancing the camera's ability to protect privacy during monitoring.

To better implement the camera monitoring method described in the embodiments of this application, in addition to the camera monitoring method, this application also provides a camera monitoring device. The camera monitoring device is integrated into an intelligent device. As shown in FIG. 7, a camera monitoring device 500 includes:

A parameter adjuster 501 configured to adjust a hardware parameter of a camera to a preset hardware parameter when a trigger condition for entering a privacy mode is triggered, wherein a clarity captured by a camera under the preset hardware parameter is lower than a clarity captured by the camera in a focused state.

A monitor 502 configured to use the camera with an adjusted hardware parameter to monitor a target scene in the privacy mode.

Optionally, the preset hardware parameter includes a target position of a lens. The parameter adjuster 501 is configured to:

Move the lens to the target position when the trigger condition for entering the privacy mode is met, wherein the target position is different from the lens position of the camera in the focused state.

Optionally, the preset hardware parameter includes a preset focal length of the lens. The lens is made of metamaterials. The parameter adjuster 501 is configured to:

Adjust the focal length of the camera to the preset focal length when the trigger condition for entering the privacy mode is met, wherein the preset focal length is different from the focal length of the camera in the focused state.

Optionally, the parameter adjuster 501 is configured to:

Acquire a first scene image of the target scene captured by the camera in the focused state.

Perform face recognition on the first scene image.

Match the recognized face image with a pre-stored user face image.

When a target face image in the first scene image matches the pre-stored user face image, determine that the trigger condition for entering the privacy mode is met.

Optionally, the parameter adjuster 501 is configured to:

Obtain the current object distance between the target face image in the target scene and the camera when the trigger condition for entering privacy mode is met.

Determine the current depth of field range based on the current object distance and the preset object distance-to-depth of field mapping relationship.

Determine the initial movement position based on the current depth of field range, wherein the depth of field range of the camera lens at the initial movement position does not overlap with the current depth of field range.

Determine the target position based on the initial movement position.

Optionally, the parameter adjuster 501 is configured to:

Acquire a second scene image captured by the camera at the initial movement position.

Determine whether the clarity of the second scene image exceeds a preset value.

If the clarity of the second scene image does not exceed the preset value, determine the initial movement position as the target position.

Optionally, the parameter adjuster 501 is configured to:

If the clarity of the second scene image does not exceed the preset value, perform face recognition.

If face recognition is successful, determine the initial movement position as the target position.

Optionally, the monitor 502 is configured to:

Obtain a fourth scene image captured by the camera at the target position.

Perform human contour recognition on the fourth scene image to obtain the number of human contours in the fourth scene image.

Perform human contour recognition on the first scene image to obtain the number of human contours in the first scene image.

Determine whether the number of human contours in the fourth scene image is the same as that in the first scene image.

If the number of human contours in the fourth scene image is different from that in the first scene image, exit privacy mode.

This application provides a camera monitoring device. When a trigger condition for entering privacy mode is met, the hardware parameter of the camera is adjusted to the preset hardware parameter, wherein the clarity of an image captured by the camera under the preset hardware parameter is lower than the clarity of an image captured by the camera in a focused state. The camera, after adjusting its hardware parameter, is then used to monitor a target scene in privacy mode. In this application, when the trigger condition for entering privacy mode is met, the camera's hardware parameter is adjusted before monitoring. During monitoring in privacy mode, the captured images are more blurred than those captured in the focused state. Since the adjustment is made to the camera's hardware parameter, the images captured in privacy mode cannot be restored to their original clarity, thereby enhancing the camera's ability to protect privacy during monitoring.

An embodiment of this application also provides an intelligent device, which integrates any of the camera monitoring devices provided in the embodiments of this application. The intelligent device includes:
One or more processors.

A memory.

One or more applications, wherein the one or more applications are stored in the memory and configured to be executed by the processor to perform the steps of the camera monitoring method in any of the embodiments of the camera monitoring method described above.

As shown in FIG. 8, FIG. 8 illustrates a structural schematic diagram of the intelligent device involved in the embodiments of this application. Specifically:

The intelligent device may include a processor 601 with one or more processing cores, a memory 602 with one or more computer-readable storage media, a power supply 603, and an input unit 604, among other components. Those skilled in the art will understand that the structure of the intelligent device shown in the figure does not limit the intelligent device, and it may include more or fewer components than illustrated, or certain components may be combined, or arranged differently.

The processor 601 serves as the control center of the intelligent device, connecting various parts of the intelligent device through various interfaces and circuits. By running or executing software programs and/or modules stored in memory 602, and accessing data stored in memory 602, the processor 601 executes various functions and data processing tasks of the intelligent device, thereby achieving overall monitoring of the device. Optionally, the processor 601 may include one or more processing cores. The processor 601 may be a Central Processing Unit (CPU), or another general-purpose processor, a Digital Signal Processor (DSP), an Application-Specific Integrated Circuit (ASIC), a Field-Programmable Gate Array (FPGA), or other programmable logic devices, discrete gate or transistor logic devices, discrete hardware components, etc. The general-purpose processor may be a microprocessor or any other conventional processor. Preferably, the processor 601 may integrate an application processor and a modem processor, wherein the application processor primarily handles operating systems, user interfaces, and applications. The modem processor mainly processes wireless communication. It should be understood that the modem processor may also not be integrated into the processor 601.

The memory 602 is used to store software programs and modules. The processor 601 executes various functional applications and data processing tasks by running software programs and modules stored in memory 602. The memory 602 primarily consists of a program storage area and a data storage area, wherein the program storage area stores the operating system, at least one application program required for functions (such as audio playback functions, image playback functions, etc.). The data storage area stores data created based on the usage of the intelligent device. Additionally, the memory 602 may include high-speed random-access memory (RAM) and non-volatile memory, such as at least one disk storage device, flash memory device, or other non-volatile solid-state storage device. Correspondingly, the memory 602 may also include a memory controller to provide access control for the processor 601 to the memory 602.

The intelligent device also includes a power supply 603, which supplies power to various components. Preferably, the power supply 603 can be logically connected to the processor 601 through a power management system, enabling charging management, discharging management, and power consumption management through the power management system. The power supply 603 may also include one or more of the following components: DC or AC power sources, rechargeable systems, power failure detection circuits, power converters or inverters, power status indicators, etc.

The intelligent device may also include an input unit 604, which is used to receive input of digital or character information and to generate input signals related to physical settings and function control, such as keyboard, mouse, joystick, optical input, or trackball signals.

Although not shown, the intelligent device may also include a display unit, which is not further elaborated here. Specifically, in this embodiment, the processor 601 of the intelligent device follows these instructions: Load the executable files corresponding to the processes of one or more applications into memory 602. The processor 601 runs the applications stored in memory 602 to perform various functions, as follows:
When the trigger condition for entering privacy mode is met, adjust the hardware parameters of the camera to preset hardware parameters, wherein the image clarity captured by the camera under the preset hardware parameters is lower than that captured by the camera in a focused state. Use the camera with adjusted hardware parameters to monitor the target scene in privacy mode.

Those skilled in the art will understand that all or part of the steps in the various methods of the above embodiments can be executed by instructions or controlled by instructions to operate related hardware. These instructions can be stored in a computer-readable storage medium and loaded and executed by a processor.

To this end, an embodiment of this application provides a computer-readable storage medium, which may include read-only memory (ROM), random access memory (RAM), magnetic disks, optical disks, other types of storage media, etc. A computer program is stored on the storage medium, which is loaded by the processor to execute the steps of any camera monitoring method provided in an embodiment of this application. For example, after the computer program is loaded by the processor, it may execute the following steps:

When the trigger condition for entering privacy mode is met, adjust the hardware parameters of the camera to preset hardware parameters, wherein the image clarity captured by the camera under the preset hardware parameters is lower than that captured by the camera in a focused state. Use the camera with adjusted hardware parameters to monitor the target scene in privacy mode.

In the above embodiments, each implementation focuses on different aspects. Parts that are not described in detail in one embodiment can refer to the detailed descriptions provided for other embodiments above, which will not be repeated here.

During specific implementation, each of the above units or structures can be implemented as an independent entity or combined in any manner to be realized as one or multiple entities. The specific implementations of the above units or structures can refer to the previously described method embodiments, which will not be repeated here.

The specific implementations of each of the above operations can also refer to the previous embodiments, which will not be repeated here.

The camera monitoring method and device provided in the embodiments of this application have been described in detail above. Specific examples have been used to explain the principles and implementation methods of this application. The descriptions of the above embodiments are only for understanding the methods and core concepts of this application. At the same time, for those skilled in the art, based on the concepts of this application, modifications may be made to specific implementation methods and application scopes. Therefore, the contents of this specification should not be interpreted as limitations on this application.

**Claims**

1.    A camera monitoring method, comprising:

      when a trigger condition for entering a privacy mode is met, adjusting a hardware parameter of a camera to a preset hardware parameter, wherein a clarity of an image captured by the camera under the preset hardware parameter is lower than a clarity of an image captured by the camera in a focused state; and
      using the camera with an adjusted hardware parameter to monitor a target scene in a privacy mode.

2.    The camera monitoring method of claim 1, wherein the preset hardware parameter comprises a target position of a lens, and adjusting the hardware parameter of the camera to the preset hardware parameter when the trigger condition for entering the privacy mode is met comprises:
      when the trigger condition for entering the privacy mode is met, moving the lens of the camera to the target position, wherein the target position is different from a lens position of the camera in the focused state.

3.    The camera monitoring method of claim 2, wherein before moving the lens of the camera to the target position when the trigger condition for entering the privacy mode is met, the method further comprises:

      acquiring a first scene image captured by the camera in the focused state for the target scene;
      performing face recognition on the first scene image;
      matching a recognized face image with a pre-stored user face image; and
      when a target face image in the first scene image matches the pre-stored user face image, determining that the trigger condition for entering the privacy mode is met.

4.    The camera monitoring method of any one of claims 2-3, wherein moving the lens of the camera to the target position when the trigger condition for entering the privacy mode is met comprises:

      when the trigger condition for entering the privacy mode is met, obtaining a current object distance of the target face image in the target scene from the camera;
      determining a current depth of field range based on a current object distance and a preset object distance-depth of field mapping relationship;

determining an initial movement position based on the current depth of field range, wherein the depth of field range of the lens of the camera at the initial movement position does not overlap with the current depth of field range; and

determining the target position based on the initial movement position.

5. The camera monitoring method of claim 4, wherein the preset object distance-depth of field mapping relationship satisfies following equations:

a foreground depth of field:

$$\Delta L1=F\delta L^{2}/(f^{2}+F\delta L);$$

a background depth of field:

$$\Delta L2=F\delta L^{2}/(f^{2}-F\delta L);$$

a total depth of field:

$$\Delta L=\Delta L1+\Delta L2=(2\ f^{2}F\delta L^{2})/(f^{4}-F^{2}\delta^{2}L^{2});$$

where:

$\delta$ is a permissible circle of confusion diameter,
F is a lens aperture value,
f is a lens focal length,
L is an object distance,
$\Delta L1$ is a foreground depth of field,
$\Delta L2$ is a background depth of field, and
$\Delta L$ is a total depth of field.

6. The camera monitoring method of claim 5, wherein determining the current depth of field range based on the current object distance and the preset object distance-depth of field mapping relationship comprises:
determining the foreground depth of field $\Delta L1$ and the background depth of field $\Delta L2$ based on the current object distance and the preset object distance-depth of field mapping relationship, and determining the current depth of field range based on the foreground depth of field and the background depth of field.

7. The camera monitoring method of claim 6, wherein the current user face position is A, and the current depth of field range is [a1, b1], wherein a1=A+$\Delta L1$, b1=A-$\Delta L2$.

8. The camera monitoring method of claim 4, wherein determining the target position based on the initial movement position comprises:

acquiring a second scene image captured by the camera at the initial movement position;
determining whether a clarity of the second scene image exceeds a preset value; and
if the clarity of the second scene image does not exceed the preset value, determining the initial movement position as the target position.

9. The camera monitoring method of claim 8, wherein the clarity of the second scene image is calculated using a no-reference image quality assessment algorithm.

10. The camera monitoring method of claim 8, wherein the no-reference image quality assessment algorithm is a Brenner gradient function or a Tenengrad gradient function.

11. The camera monitoring method of claim 8, wherein if the clarity of the second scene image does not exceed the preset value, the initial movement position is determined as the target position, comprising:

if the clarity of the second scene image does not exceed the preset value, performing face recognition; and

if the face recognition is successful, determining the initial movement position as the target position.

12. The camera monitoring method of claim 11, further comprising:

acquiring a fourth scene image captured by the camera at the target position;
performing human contour recognition on the fourth scene image to obtain a number of human contours in the fourth scene image;
performing human contour recognition on the first scene image to obtain a number of human contours in the first scene image;
determining whether the number of human contours in the fourth scene image is same as the number of human contours in the first scene image; and
if the number of human contours in the fourth scene image is different from the number of human contours in the first scene image, exiting the privacy mode.

13. The camera monitoring method of claim 1, wherein the preset hardware parameter comprises a preset focal length of the lens, the lens is made of metamaterials, and adjusting the hardware parameter of the camera to the preset hardware parameter when the trigger condition for entering the privacy mode is met comprises:
when the trigger condition for entering the privacy mode is met, adjusting the focal length of the camera to the preset focal length, wherein the preset focal length is different from the focal length of the camera in the focused state.

14. A camera monitoring device, comprising:

a parameter adjuster configured to adjust a hardware parameter of a camera to a preset hardware parameter when a trigger condition for entering a privacy mode is met, wherein a clarity of an image captured by the camera under the preset hardware parameter is lower than a clarity of an image captured by the camera in a focused state; and
a monitor configured to use the camera with an adjusted hardware parameter to monitor a target scene in a privacy mode.

15. The camera monitoring device of claim 14, wherein the parameter adjuster is configured to:

acquire a first scene image captured by the camera in the focused state for the target scene;
perform face recognition on the first scene image;
match a recognized face image with a pre-stored user face image; and
when a target face image in the first scene image matches the pre-stored user face image, determine that the trigger condition for entering the privacy mode is met.

16. The camera monitoring device of claim 15, wherein the parameter adjuster is further configured to:

when the trigger condition for entering the privacy mode is met, obtain a current object distance of the target face image in the target scene from the camera;
determine a current depth of field range based on the current object distance and a preset object distance-depth of field mapping relationship;
determine an initial movement position based on the current depth of field range, wherein the depth of field range of the camera lens at the initial movement position does not overlap with the current depth of field range; and
determine a target position based on the initial movement position.

17. The camera monitoring device of claim 16, wherein the parameter adjuster is configured to:

acquire a second scene image captured by the camera at the initial movement position;
determine whether a clarity of the second scene image exceeds a preset value; and
if the clarity of the second scene image does not exceed the preset value, determine the initial movement position as the target position.

18. The camera monitoring device of claim 17, wherein the parameter adjuster is further configured to:

if the clarity of the second scene image does not exceed the preset value, perform face recognition; and
if the face recognition is successful, determine the initial movement position as the target position.

19. An intelligent device, comprising:

    one or more processors;
    a memory; and
    one or more applications, wherein the one or more applications are stored in the memory and configured to be executed by the processor to implement the camera monitoring method according to any one of claims 1 to 13.

20. A computer-readable storage medium, wherein a computer program is stored thereon, and the computer program is loaded by a processor to execute steps of the camera monitoring method according to any one of claims 1 to 13.

FIG. 1

| |
|---|
| When a trigger condition for entering a privacy mode is met, adjusting a hardware parameter of a camera to a preset hardware parameter, wherein a clarity of an image captured by the camera under the preset hardware parameter is lower than a clarity of an image captured by the camera in a focused state. |

S201

| |
|---|
| Using the camera with an adjusted hardware parameter to monitor a target scene in a privacy mode. |

S202

FIG. 2

| |
|---|
| Acquiring a first scene image captured by the camera in the focused state for the target scene. |

S301

| |
|---|
| Performing face recognition on the first scene image. |

S302

| |
|---|
| Matching a recognized face image with a pre-stored user face image. |

S303

| |
|---|
| When a target face image in the first scene image matches the pre-stored user face image, determining that the trigger condition for entering the privacy mode is met. |

S304

FIG. 3

| When the trigger condition for entering the privacy mode is met, obtaining a current object distance of the target face image in the target scene from the camera. | S401 |

↓

| Determining a current depth of field range based on a current object distance and a preset object distance-depth of field mapping relationship. | S402 |

↓

| Determining an initial movement position based on the current depth of field range, wherein the depth of field range of the lens of the camera at the initial movement position does not overlap with the current depth of field range. | S403 |

↓

| Determining the target position based on the initial movement position. | S404 |

FIG. 4

total depth of field ΔL

depth of focus

far point    near point

background depth of field ΔL2

foreground depth of field ΔL1

near point distance

front depth of focus

permissible circle of confusion diameter δ

subject distance

image distance

rear depth of focus

far point distance

shooting distance L

focal plane

FIG. 5

FIG. 6

FIG. 7

FIG. 8

## INTERNATIONAL SEARCH REPORT

| International application No. |
|---|
| **PCT/CN2023/098944** |

### A. CLASSIFICATION OF SUBJECT MATTER

H04N7/18(2006.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNABS; CNTXT; ENTXT; ENTXTC; CJFD; CNKI: 低, 清晰, 模糊, 合焦, 失焦, 隐私, 移动, 镜头, 调整, 像距, low, definition, blur, focus, defocus, privacy, move, lens, adjust, distance

### C. DOCUMENTS CONSIDERED TO BE RELEVANT

| Category* | Citation of document, with indication, where appropriate, of the relevant passages | Relevant to claim No. |
|---|---|---|
| X | CN 114815638 A (BEIJING BOE TECHNOLOGY DEVELOPMENT CO., LTD. et al.) 29 July 2022 (2022-07-29) description, paragraphs [0069]-[0094], [0169], [0275], and [0299]-[0300] | 1-20 |
| A | CN 106803930 A (SHANGHAI PHICOMM COMMUNICATION CO., LTD.) 06 June 2017 (2017-06-06) entire document | 1-20 |
| A | CN 107294915 A (YULONG COMPUTER TELECOMMUNICATION SCIENTIFIC (SHENZHEN) CO., LTD.) 24 October 2017 (2017-10-24) entire document | 1-20 |
| A | CN 110290313 A (HENAN UNIVERSITY) 27 September 2019 (2019-09-27) entire document | 1-20 |
| A | CN 110719402 A (VIVO MOBILE COMMUNICATION (HANGZHOU) CO., LTD.) 21 January 2020 (2020-01-21) entire document | 1-20 |
| A | EP 3564900 A1 (AXIS AB) 06 November 2019 (2019-11-06) entire document | 1-20 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **16 August 2023** | **02 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/098944**

**C.    DOCUMENTS CONSIDERED TO BE RELEVANT**

| Category* | Citation of document, with indication, where appropriate, of the relevant passages | Relevant to claim No. |
|---|---|---|
| A | US 9083850 B1 (SECURUS TECHNOLOGIES INC.) 14 July 2015 (2015-07-14)<br>entire document | 1-20 |

Form PCT/ISA/210 (second sheet) (July 2022)

**INTERNATIONAL SEARCH REPORT**
Information on patent family members

International application No.

**PCT/CN2023/098944**

| Patent document cited in search report | | | Publication date (day/month/year) | Patent family member(s) | | | Publication date (day/month/year) |
|---|---|---|---|---|---|---|---|
| CN | 114815638 | A | 29 July 2022 | WO | 2023024729 | A1 | 02 March 2023 |
| CN | 106803930 | A | 06 June 2017 | None | | | |
| CN | 107294915 | A | 24 October 2017 | CN | 107294915 | B | 10 November 2020 |
| CN | 110290313 | A | 27 September 2019 | CN | 110290313 | B | 15 September 2020 |
| CN | 110719402 | A | 21 January 2020 | WO | 2021057267 | A1 | 01 April 2021 |
| | | | | CN | 110719402 | B | 06 July 2021 |
| EP | 3564900 | A1 | 06 November 2019 | TW | 202004659 | A | 16 January 2020 |
| | | | | JP | 2019220151 | A | 26 December 2019 |
| | | | | JP | 6804584 | B2 | 23 December 2020 |
| | | | | US | 2019340731 | A1 | 07 November 2019 |
| | | | | US | 10755388 | B2 | 25 August 2020 |
| | | | | KR | 20190127545 | A | 13 November 2019 |
| | | | | KR | 102118284 | B1 | 09 June 2020 |
| | | | | EP | 3564900 | B1 | 01 April 2020 |
| | | | | CN | 110443744 | A | 12 November 2019 |
| | | | | CN | 110443744 | B | 08 January 2021 |
| | | | | TW | 771580 | B1 | 21 July 2022 |
| US | 9083850 | B1 | 14 July 2015 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022109434759